(19) Europäisches Patentamt
European Patent Office
Office européen des brevets

(11) **EP 4 589 352 A1**

## (12) EUROPEAN PATENT APPLICATION

(43) Date of publication:
**23.07.2025 Bulletin 2025/30**

(21) Application number: **24152916.3**

(22) Date of filing: **19.01.2024**

(51) International Patent Classification (IPC):
***G02B 6/42*** *(2006.01)*

(52) Cooperative Patent Classification (CPC):
**G02B 6/4227; G05B 19/19**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Physik Instrumente (PI) SE & Co. KG 76228 Karlsruhe (DE)**

(72) Inventor: **Price, Matthew Huntington Beach, 92646 (US)**

(74) Representative: **Grünecker Patent- und Rechtsanwälte PartG mbB Leopoldstraße 4 80802 München (DE)**

## (54) MULTI-AXIS PHOTONICS ALIGNMENT USING A RANDOM SEARCH

(57) The present disclosure relates to aligning an optical input with an optical output and in particular to a first search followed by a second search. The first search includes obtaining a first alignment of the optical input and the optical output for which a light beam emitted from the optical output is detected at the optical input, wherein the searching of the alignment includes performing the following steps repeatedly until a predefined condition is satisfied, the condition including a measurement value of a signal strength at the optical input satisfying a threshold condition: a) determining an alignment of the optical input and the optical output as a random value, from a pre-determined search range, b) moving the optical input and/or the optical output such that the optical input and the optical output are in the determined alignment, and c) obtaining one or more measurement values of the signal strength at the optical input on the trajectory to the alignment.

**FIG. 1A**

EP 4 589 352 A1

**Description**

The present disclosure regards methods and apparatuses for automated aligning light output and light input.

BACKGROUND

Photonic Integrated Circuits (PICs) are enabling a proliferation of applications that leverage highbandwidth data transfer with low power consumption. Silicon Photonic (SiPh) devices can be found performing critical tasks in nascent technologies from free space optical communications to quantum computing, and have been mainstream for example for inter-server routing in hyper-scale data centers. With the increasing prevalence of Silicon Photonic devices and the complex multilayered semiconductor processes required to fabricate them, equipment and methods to efficiently test and package at scale is of high importance.

A fully-patterned SiPh wafer may be at first subjected-to testing (probing) of each embedded chip to ensure functionality and performance. Conventionally, such wafer level test of Silicon Photonics devices is performed via a surface coupling with an external fiber-coupled light source. For that purpose, the optical axis may run substantially orthogonal relative to the wafer plane. In this case, the substantially may still involve deviations of 10-20° from the orthogonal direction when, for example, the light is coupled through a grating coupler to the waveguide. Alternatively, edge coupling process may be applied with the optical axis running collinear with the waveguide.

The mode field diameters of the alignment targets can range from micron (i.e. micrometer) to sub-micron scale, so that alignment (in this example, of device to fiber) may need to be accurate to a small fraction of this scale. Since such accuracies may be smaller than can be resolved with an optical microscope, the alignment should be performed actively, meaning the actual coupling should be found and optimized. Such search and optimization may need to often start from a starting condition of zero coupling. Once alignments have been completed, photonic tests such as power metrology, spectroscopy, and bandwidth measurement can be performed single-sided with a fixed output and an actively aligned illuminated input, or double-sided with both input and output actively aligned. The efficiency of the light coupling is usually measured by a detector or power meter and communicated to a specialized motion controller as a scaled analog voltage. A threshold condition is usually applied externally, by a user, to define a successful alignment.

After wafer probing is completed, similar challenges repeat at succeeding stages of production and assembly to ensure the continued viability of each chip as it is processed.

Provided the tight alignment target dimension and relative uncertainty in positional tolerances of the components being aligned, a two-phase search algorithm may be performed. The first phase of the alignment is an area search for first signal finding followed by a second phase optimization method. The latter can include real-time tracking to ensure that the coupling is maintained given thermal changes, glue deposition and curing, or the like.

The area scan for the first signal finding has been typically performed with a cyclical pattern using a fixed distance pitch at a sub-mode field diameter resolution, typically using Archimedean spirals or sinusoidal raster scans. Spatially, the inherent position uncertainty necessitates the first signal finding searches to be performed in rectangular search zones of typically 100 to 10,000 $\mu m2$ with fixed pitch at the micronto-sub-micron scale. The area scan performed with repeating curvilinear geometries of this type requires many repetitions with pitch at sub-mode field diameter to ensure the search is successful. These repetitive, tightly pitched area scans even when operated on high frequencies can require seconds to hours to complete the search, depending on the test conditions and the mechanisms employed.

Accordingly, it would be desirable to further improve the search and, in particular, to make it faster.

SUMMARY

The invention facilitates a faster first area search for alignment between an optical output and an optical input by randomly determining alignments between which the light signal is sampled on a search trajectory.

The invention is defined by the independent claims. Some exemplary implementations are provided by the dependent claims.

For example, a method is provided for aligning an optical input with an optical output. The method comprises the step of performing a first search for obtaining a first alignment of the optical input and the optical output for which a light beam emitted from the optical output is detected at the optical input, wherein the searching of the alignment includes performing the following steps repeatedly until a predefined condition is satisfied, the condition including a measurement value of a signal strength at the optical input satisfying a threshold condition: (i) determining an alignment of the optical input and the optical output as a random value, from a predetermined search range, (ii) moving the optical input and/or the optical output such that the optical input and the optical output are in the determined alignment, and (iii) obtaining one or more measurement values of the signal strength at the optical input on the trajectory to the alignment. The method further comprises the step of performing a second search for obtaining a second alignment of the optical input and the optical output for which the signal strength is larger than the signal strength at the first alignment.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

BRIEF DESCRIPTION OF DRAWINGS

An understanding of the nature and advantages of various embodiments may be realized by reference to the following figures.

FIG. 1A    is a schematic drawing illustrating an exemplary system for performing an alignment between an optical output and an optical input (direct coupling scenario).

FIG. 1B    is a schematic drawing illustrating an exemplary system for performing an alignment between an optical output and an optical input (indirect (surface) coupling scenario).

FIG. 1C    is a schematic drawing illustrating an exemplerary system for performing a parallel alignment of optical output with optical input relative to an intermediate waveguide input and output, respectively.

FIG. 2    is a flow diagram illustrating an exemplary method for performing search of the alignment between an optical output and an optical input.

FIG. 3    is a schematic drawing illustrating an exemplary trajectory of a first area search.

FIG. 4    is a schematic drawing illustrating an exemplary effective search zone for a given measurement (sampling) point.

FIG. 5    is a schematic drawing illustrating a raster scan method in an exemplary scenario.

FIG. 6    is a schematic drawing illustrating a Monte Carlo method in the exemplary scenario.

FIG. 7    is a schematic drawing comparing portions of a search space scanned in by a raster scan in 1.25 s and by a Monte Carlo search in 40 ms.

FIG. 8    is a flow diagram illustrating detailed steps of an exemplary threshold determining method .

FIG. 9    is a flow diagram illustrating stages of an exemplary threshold determining.

FIG. 10    is a block diagram illustrating functional modules of an alignment module of Fig. 1A.

FIG. 11    is a block diagram illustrating functional modules of a control module of Fig. 1A.

FIG. 12    is a schematic drawing illustrating an exemplary current systematic search approach.

Like reference numbers and symbols in the various figures indicate like elements, in accordance with certain example implementations.

DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

The present disclosure provides methods and apparatuses as well as programs and systems for performing an alignment between a light output and a light input. The present invention is not limited to any particular application of spatial scale. Nevertheless, it is readily applicable, among others, to micron scale and to applications in testing, assembly, packaging or using Photonic Integrated Circuits (PICs). Further possible exemplary applications include sub-micron scales and/or searched including rotational degrees of freedom instead of the linear degreed of freedom (x, y, and possibly z axes). For example, the present disclosure can be applied to rotational positioning for signal transmission in a search field. The methodology can be applied also generally to electrical signal searches or other feedback units with similar characteristics as photonics search. Thus, the present disclosure is not limited to the photonics search.

In particular, the alignment was developed as a two-dimensional photonics first "light" signal finding technique for automated systems to align signal senders (optic outputs) with signal receivers (optic inputs) simultaneously through intermediate waveguides or via direct coupling. The method can be applied such that the sender is moved through the search field aligning to stationary receiver or with stationary sender and dynamic receiver. With an intermediate waveguide, both sender and receiver are moved simultaneously in a double-sided first light signal finding. For example, the intermediate waveguide may be a silicon photonics circuit or other embedded or packaged light conducting materials or media that allows transmission of light. The transmitted signal via coupling from sender to receiver may be evaluated by a detector/power meter with a scaled analog voltage connected to the motion control module and is evaluated by the algorithm to determine if sufficient signal is present to terminate the search. The sender can be free space optical signal directed by a mirror or via a fiber optic/optical array translated in space directly to receiver, as well as potential other area search techniques with first signal finding requirements.

Photonics first light signal searches are typically performed over a bounded region that is sufficiently large such that a sender is present but cannot be located precisely by the receiver due to physical limitations of precision and accuracy of processes, fixtures, and general operating environment variability. Current photonic signal finding methodologies are based on systematic searches using fixed-pitched, curvilinear motion paths with user-defined search parameters that typically include search location, search range, pitch, operating frequency, and signal threshold condition. An example of the current paradigm that is prevalent in state-of-the-art is the use of sinusoidal raster scans or spiral searches. These curvilinear trajectories with user-defined thresholds have inherent limitations when applied to photonics alignment.

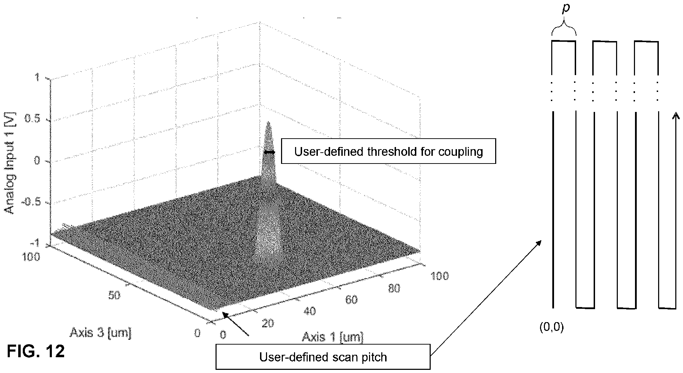

Such known approach is illustrated in Fig. 12. Fig. 12 shows a two-dimensional search space and distribution of detected light intensity (in units of volts). The goal is to locate a Gaussian sender (a sender with Gaussian distributed intensity of light in a beam cross section) with an approximate mode field diameter of 10 $\mu$m in a search filed of approximately 100 $\mu$m x 100 $\mu$m. In this case, a human user has defined a conservative threshold condition (restricting the effective target zone size for threshold condition bounded signal) according to the expected Gaussian intensity distribution. In current approaches this threshold condition ("User-defined threshold for coupling" in Fig. 12) is selected by the user as an input and is often based on prior test data but not based on in-situ system signal conditions that exist at the specific time of scanning. Often because of inherent systemic variability in both setup and devices, a conservative value is selected to guarantee a positive outcome. However, this can have a negative impact on scan time.

Moreover, in this example and others like that, a fixed pitch (separation) $p$ between adjacent scans must be set relative to the target zone area. This imposes constraints on scan pitch to be sufficiently precise to yield a positive outcome at the required signal threshold level. In the case shown in Fig. 12 with corresponding threshold target of 10 microns, a rough approximation of a 2-micron scan pitch is shown as sufficient in terms of spatial resolution to yield a positive outcome. The result, however, is that at least 25 scans must run to observe a threshold condition as met and if the scan is run to completion, approximately 50 scans are required for the given 100 x 100 micron search space. It is not uncommon for a precision automation system to run at 5 to 10 Hz for these photonics search methodologies, which achieve signal finding times of 2.5 seconds (with interruption as soon as the threshold condition is fulfilled) or 5 seconds (without interruption).

In the present disclosure, the search is improved. In particular, the approach of the present disclosure for photonics alignment uses a Monte Carlo (random based) technique to facilitate automated signal area search.

*Random alignment search (Monte Carlo simulation based search)*

The Monte Carlo Simulation is suitable to estimate areas for bounded 2D shapes of any geometry, for which it may be difficult to precisely calculate the enclosed area size. These areas may be embedded in larger regions of regular geometry that can be readily calculated. The simulation populates points randomly in the interior of the larger enclosed bound until sufficient data density is available to make a reasonable estimate of the enclosed area of the bounded geometry. This is done with the assumption that the ratio of randomized points bounded in each region will ultimately match the ratio of areas that enclose them.

Such Monte Carlo simulation-based approach is applied in the present embodiment photonics alignment algorithm, used not to evaluate area size, but rather to locate a search target. The advantages of the Monte Carlo Simulation technique for photonics alignment are distinctly in enabling.

According to an embodiment, a method is provided for aligning an optical input with an optical output. Aligning refers to positioning the optical input and optical output relatively to each other in such a way that the light output by the optical output is transferred to the optical input. A complete transfer in practical system may not be achievable. Nevertheless, it may be desirable to transfer as much light as possible under given conditions, which may include optical aberration, desired distance between the light input and output, or the like.

An optical input may be any kind of optical receiver, e.g. photonic detector such as a photo diode or any kind of a wave guide such as an optic cable or any optical inlet or system.

The aligning is not necessarily performed between the actual source of light and drain (receiver/detector) of light. For example, an aligning may be desired between two opposing parts (e.g. plug and socket) of an optical connector. For the purpose of alignment, an optical source / drain may be connected to these parts, which are not a part of the aligned or aligning system. On the other hand, the present disclosure is also applicable to an optical source (e.g. light emitting or laser diode) as the optical output and/or to an optical drain (e.g. photodiode) as part(s) of the aligned system. In general, the optical source and/or drain may be external, a part of aligned system or a part of the aligning system.

Some specific practical examples of an optical signal sender and an optical receiver include fiber optic based arrays, free space to fiber systems, or positioning lenses for optimal relative light transmission. It is noted that although reference is made to an optical input and an optical output, the present disclosure is not limited to a singular input/output: for example, fiber arrays which are parallel light carriers can be aligned to a parallel array of light receivers. In general, one or more optical outputs and one or more respective optical inputs may be aligned.

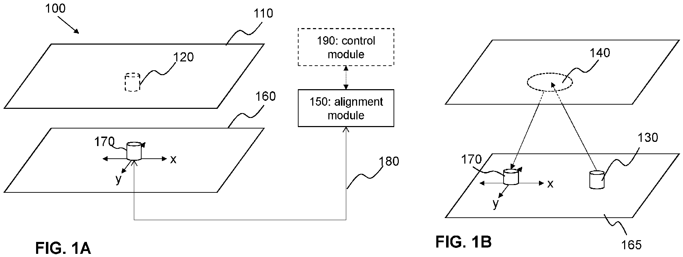

Fig. 1A schematically illustrates an exemplary system arrangement 100 for aligning an optical output 120 and an optical input 170. The optical output 120 is illustrated in Fig. 1A as located at a fixed position (for the purpose and duration of the alignment) within a holding module 110 for holding the optical output 120. The optical input 170 is illustrated as having an adjustable position in at least two dimensions x and y. The adjustability may be provided by a movable module 160. The movable module may have means for holding the optical input 170 and means for controllably moving the holding means. This arrangement is merely exemplary. In general, both optical input and optical output, or either of them can be adjustable (movable). The adjustability may extend to more than 2 axes, e.g. it may include axis z perpendicular to both axes x and y, and/or rotation axis or axes in order to adjust the tilt of the optical input/output. Moreover, there is in principle no need for holding module 110, depending on the kind of optical input subject to the alignment.

An aligning module 150 in this example integrates functions of an alignment detection and control of the relative position between the input 170 and output 120. For example, the aligning module 150 in its function as alignment detector may receive signal from the optical input 170 and determine whether or not a desired degree of alignment is achieved. If the desired degree of alignment is not achieved, the aligning module, in its function as controller, may control the movable module 160 to move the input 170 to another position. This exchange of signals is represented by bidirectional arrow 180. However, it is noted that this arrangement is only exemplary. For example, in case the output 120 and not the input 170 is movable, the aligning module 150 may detect alignment by controlling the output 120. Further constellations are conceivable as is clear for those skilled in the art.

However, Fig. 1A is only exemplary and not to limit the present disclosure. The search described herein is also applicable for other than direct coupling. For example, as shown in Fig. 1B in a case of surface coupling, the fibers (in general the input 170 and an output 130) both come from one plane 165, with possibly a slight angle relative to a vertical direction. The wave guide 140 (e.g. on that may be for instance a grating coupler direct into waveguide or the like). The horizontal (X-Y) plane 140 in this case is searched. In this figure, the input 170 and output 130 are not collinear (but rather oblique or approximately vertical relative to each other).

Moreover, Fig. 1A shows a control module 190 which may be a part of the system and which implements adaption / setting of the threshold condition. In the same way, the control module 190 and/or the aligning module 150 may be part of a system as illustrated in Fig. 1B, receiving light input from the light input 170.

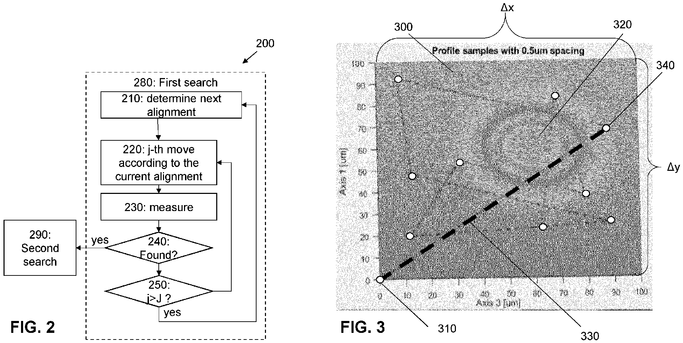

The steps of the aligning method 200 are illustrated in Fig. 2. In particular, according to this method, a first search 280 and a second search 290 are performed. The first search 280 may be faster and less accurate and serves for finding location of the optical output by finding light intensity exceeding the noise. The second search may be more accurate and serves for a finer alignment of the optical output 120 and input 170 in order to increase or maximize the optical coupling, i.e. light transferred from the output 120 to the input 170.

In general, the first search 280 serves for obtaining a first alignment of the optical input 170 and the optical output 120 for which a light beam emitted from the optical output 120 is detected at the optical input 170. The searching of the (first) alignment includes performing the following steps repeatedly until a predefined condition is satisfied. The predefined condition includes a measurement value of a signal strength at the optical input 170 satisfying a threshold condition.

Step 210 is a step of determining an alignment of the optical input 170 and the optical output 120 as a random value, from a predetermined search range. The determined alignment is a next alignment, e.g. a destination of a linear movement starting from a current position. When step 210 is executed for a first time within the first search 280, the current position is a predefined start position. The current position for each but the first time within the first search 280 is the position of the most recent randomly generated alignment (alignment from the preceding cycle).

For example, such predefined start position may be a fixed position within the predetermined search space, such as an origin of the coordinate system of the search space. However, the present disclosure is not limited to such start and the start position may be selected anywhere within or even out of the search space.

Regarding the term "determining an alignment", the present disclosure is not limited to any specific format and the alignment may be an absolute alignment within the entire predetermined search space or may be a relative alignment generated relative to the current position or the like. It is noted that the term a "random value" includes pseudo-random value, i.e. a value generated by a pseudo-random generator as known from the computer technology. However, the present disclosure is not limited to pseudo-random generators as it is conceivable to employ even a true random (quantum effect based) generator.

Step 210 includes the random value usage. However, it is noted that the generation of the random values may be, but does not have to be performed on the fly. In particular, a random number may be generated each time step 210 is executed. This approach may reduce computation time because only random numbers are generated that are actually used, and it reduces storage requirements. Alternatively, a random number sequence may be pre-generated and stored, e.g. in a look-up table, and each time step 210 is executed, a next among the stored values is taken as the random value.

Step 220 is a step of moving the optical input 170 and/or the optical output 120 such that the optical input 170 and the optical output 120 are in the determined alignment. For example, the movement may be on a shortest trajectory connecting the current position and the determined alignment. The trajectory may be linear.

Step 230 is a step of obtaining one or more measurement values of the signal strength at the optical input 170 on the trajectory to the alignment. The trajectory may include the end point, i.e. the position of the determined alignment.

The cyclic repetition of the three steps 210, 220, 230 is illustrated in Fig. 2 by means of decision block 240. In the step 240 it is tested whether the predefined condition is satisfied. The condition may be a condition on the signal strength measured at the input 170. In case the predefined condition is not satisfied, another cycle (possibly over step 240) is performed, starting again at step 210. On the other hand, in case the predefined condition is satisfied, the first search method 280 ends and the second search method 290 is performed ("yes" in step 240).

For example, the step 230 of obtaining one or more measurement values of the signal strength comprises sampling of the signal strength during said moving step 230 with a predefined sampling frequency. Fig. 2 illustrates the corresponding exemplary cycle, which is performed J times. J is a number of measurement samples per trajectory from the current position to the determined alignment. It is noted that J may be fixed for different trajectories or may be variable for different trajectories. For example, the sampling (measurement) rate may be fixed and thus, less measurements are performed on a shorter path and more measurements are performed on a longer path. In Fig. 2, in step 250 it is tested whether the number of measurements on the trajectory to the determined alignment (determined in step 210) has been reached. If it was reached, the next random alignment is generated ("yes" in step 250), i.e. the method continues with step 210. If on the other hand, the number of measurements J on the trajectory has not been reached, the movement 220 and measurement 230 steps continue.

It is noted that the sequence of execution of steps 240 and 250 or their location within the flow diagram of Fig. 2 is merely exemplary. Their sequence of execution may be reversed or these checks may be performed in a different manner or in a different position within the flow chart.

As mentioned, the method 200 further comprises performing the second search 290 for obtaining a second alignment of the optical input and the optical output for which the signal strength is larger than the signal strength at the first alignment.

Such second search 290 may be based on a gradient search, following a gradient of the signal strength from the point (position within the search space) in which the first search 280 stopped.

It is noted, that the first signal finding method 280 can be applied with any subsequent optimization method 290 and need not be constrained solely to a gradient search.

In an exemplary implementation, the first search 280 is performed in two dimensions. Such search is illustrates schematically in Fig. 3. In particular, Fig. 3 shows a predetermines search space 300. The search space has two dimensions x and y. In the example of Fig. 3, both axes have a scale in micrometers from 0 to 100. However, this is only an example. In general, the present disclosure is not limited to any particular scale and the scale and/or the size of the search space may be given by the application (e.g. expected size or distribution of the signal beam). The search space 300 illustrates in Fig. 3 signal values at each location. These, however, are in a practical use not known - only the sampled measurement values during each trajectory are known. The measured signal strength is in general stronger in the location of the beam 320, illustrated in Fig. 3 by the signal strength distribution in concentric circles. The sampling in this example is performed each 0.5 micrometer. The start position 310 is located in the origin point (0, 0) of the search space 300. A first trajectory 330 from the start position 310 to a first random alignment position 340 is shown to be a dashed line. The alignment may be also defined by the two coordinates in the respective two dimensions. It is noted that the remaining trajectories are only exemplary to illustrate randomly determined nodes and paths between them (stopping upon reaching of the threshold condition is not illustrated in Fig. 3).

It is noted that the two dimensions (X-Y) of the search space may be perpendicular to the light beam. However, the present disclosure is not limited to such example, and the alignment may be performed at oblique angles (depending on the coupling path between the input 170 and the output 120) or collinear/parallel. For example, in a case of an edge coupling (or direct coupling), the collinearity means that the input and output run in a line as may be the case in Fig. 1A. Still, the search zone may be crossed obliquely or perpendicularly. In Fig. 1B also, the input and output may be inclined with regard to the vertical axis (axis perpendicular to the 2 dimensions).

It is noted that the two dimensions are only exemplary. In general, the alignment method 200 can be applied in 3 dimensions. For example, height (or more general distance between the planes in which the input 170 and the output 120 are located / moved and which are parallel to each other) may also be varied as a part of the search.

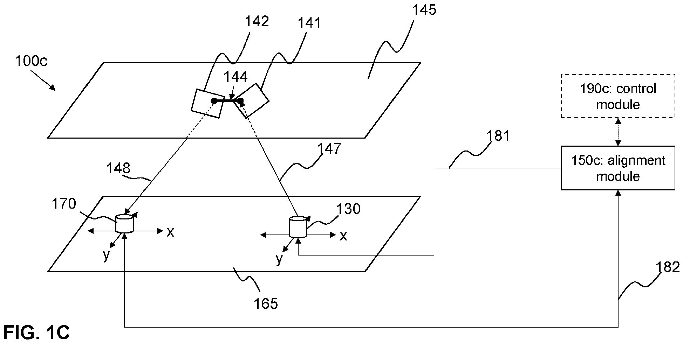

According to an exemplary implementation, as mentioned above with reference to Fig. 1, the moving step is performed by moving the optical input relative to a fixed optical output. It may facilitate implementation for instance in cases in which the active part such as light source is a part of the system and fixed during the first and second searches. However, the present disclosure is not limited to such configurations. In general, the optical input 170 and output 120 can be moved simultaneously relative to an intermediate light carrier (or with fixed input relative to fixed output or vice versa) as shown, for instance, in Fig. 1B schematically. In some exemplary implementations, this may be used if there is an intermediate silicon photonic light circuit that requires to be tested. Light probes may be used with sender (output 130) and receiver(input 170). The example of Fig. 1B shows coupling light into and out of a photonic circuit on wafer 140. This configuration may be specifically used for testing of the light carrying circuit and/or device 140.

In some embodiments, a monitored automated threshold determination may be performed. In particular, demands of resolution is shifted from spatial path pitch to data sampling frequency, enabling for raising alignment speeds and possibly using a calibration routine to determine an optimal coupling threshold condition. This may be more robust and adaptive than a user-defined threshold, such as threshold coupling condition, and pathing parameters. It may be simpler and more suitable for the first light finding. The Monte Carlo search allows the scan field (search area) to be traversed more rapidly (covering a wide search field) with high resolution typical of tight pitched scans but provided by a high frequency sampling. Moreover, a Monte Carlo (random) search does not require any a priori knowledge of the signal size and location.

To actively perform the Monte Carlo simulation with precision automation systems, a paradigm for intelligent commanding of a motion system is provided. The motion system may be a motorized or piezo positioning equipment or any other positioning equipment.

In the following, a detailed example of performing the first search 280 is provided with reference to Fig. 3. A coordinate origin node 310 and search range (given by 100 microns on each of the two axes x and y) are defined and mapped onto a bounded rectangular search zone 300. In other words, a normalized coordinate set (normalized on the search space) that corresponds to the motion system.

Search origin node 310 may be denoted as having the coordinates $(x_i, y_i)$. X-Axis search range may be denoted as $(x_i+\Delta x)$ and Y-Axis Search Range may be denoted as $(y_i+\Delta y)$. Such bounded search zone corresponds to the search range mentioned above. With the bounded search zone defined, two random numbers may be generated, the two random numbers representing coordinates within the search range. The two random numbers $X_i$ and $Y_i$ are thus generated from the respective ranges in the two spatial directions of the search range:

$$X_i = \beta_1 * (X_0 + \mu_{xi} * (RANDX)),$$

$$Y_i = \beta_2 * (Y_0 + \mu_{yi} * (RANDY)).$$

RANDX and RANDY are computer functions returning a (pseudo-)random value from the range [0,1]. Any available random number generator may be used. The distribution of the random numbers generated may be uniform. However, the present disclosure is not limited thereto, and other distributions may be applied.

It is noted that the random generator values may be further constrained. For example, it may be ensured that a random generator does not generate values resulting in sampling paths too close to previously travelled sampling paths (trajectory). However, such a dead zone may require some storage capacity to actually store the history (travelled paths) and computational power to test and enforce the constraint. However, due to the intermodal sampling and random nature, a simple random generator normalized to the current search range would typically be sufficiently efficient.

The output of RANDX and RANDY is further normalized with a correct offset (X0, Y0) and scaling $\mu_{xi}$, $\mu_{yi}$ to match the search zone for the attached motion system. For square search regions $\mu_{xi} = \mu_{yi}$, The positioning system may not be commanded in explicit motion coordinates mapped to the search zone.

The positioning system for example, can be analog voltage commands to amplifiers driving piezo positioning equipment that are calibrated by travel linearly to an applied voltage. In such cases $\beta_1$, $\beta_2$ coefficients are used to scale voltage to correct travel positions for the control module to command correct positions (via voltage). Otherwise, coefficients $\beta_1$, $\beta_2$ can be omitted.

Thus, Xi and Yi specify absolute move position within the search range in this example. For example, in practical systems, two floating point double precision random number generators RANDX, RANDY from the range of [0,1] may be provided. It is noted that by two random generators, not necessarily two different structural generators are meant. It may be that a random number generator function is executed two times, either sequentially or in parallel.

While moves (to the next randomly generated alignment, cf. step 210) may be constrained to an achievable move frequency of the precision automation system, the sampling (measurement 230) of the space between positions of nodes of the motion cycle may be updated at a significantly higher frequency. Such higher-frequency internodal sampling (sampling between the randomly generated nodes) may facilitate obtaining of rapid results in the Monte Carlo search.

Fig. 3 illustrates a result of iteratively defining position nodes (next alignment in step 210, shown as small empty circles in Fig. 3) updated at move frequency. In Fig. 3, a move is a linear move from the current node to the next node, also referred to as vector move. The intermodal sampling is illustrated schematically by the dotted line between the nodes.

As described above, based on the sampled (measured) intensity of signal, the search may terminate. Specifically, if the measured intensity is higher than a predefined threshold, the search may stop. However, it is noted that such a threshold is only an exemplary implementation of a search terminating condition. It is conceivable to terminate the search based on a different condition, such as finding more than one values exceeding the threshold or find a particular distribution characteristic or the like.

According to an exemplary implementation, the monitoring (e.g. as in steps 230 and 240) of the measured values starts at the initiation of the Monte Carlo search and continues during the internodal movement to determine whether a success condition (which may be a search terminating condition) is satisfied. The success condition may be defined by a user, pre-set or determined automatically as will be described below in more detail.

The determination of the success condition may be based on an automated noise determination. The sampling (measurement) 230 runs at a frequency greater than the frequency of the moves (210) to improve spatial search resolution beyond conventional curvilinear path spatial pitch. For example, possible move frequencies may be about 50 Hz and sampling frequencies at or above 5 kHz.

The success condition may be defined, for example for a voltage measurement (e.g. by a photo detector in the optical input 170). In particular, the success condition may be satisfied measured voltage vm is larger than a success voltage vs: vm > vs.

More specifically, a successful conditional that would yield an aligned result may be based on a baseline noise measurement (and clear presence of a signal above baseline noise). For exemplary purposes that minimum voltage value is a test at 6-Sigma above standard average noise when misaligned. When a voltage signal is identified at this level (it indicates presence of the transmitted signal), indicating scan termination is acceptable. This is related to the strength of the transmitted optical signal in the alignment environment and may be variable depending on the sources and devices involved. In general, the conditional voltage level may be based on a proportion (e.g., percentage [%]) of maximum signal and/or noise value.

The monitoring runs on a higher frequency loop taking 230 coordinate triple (Xn, Yn, In) samples at high spatial resolution while the Monte Carlo Area Search is running to distinct position nodes disparately across the scan field automatically determining if observation meets threshold criteria for signal found (success) condition. This determination is made in the loop (steps 220, 250). When successful, the Monte Carlo search is terminated the motion system may be moved to the found position. This may be symbolically described as follows: IF In+$\Delta$>Is : STOP Monte Carlo search and command motion system to move to (Xn,Yn) where In was observed. Here, In is observed light intensity (may correspond to a measured voltage), Is is the success intensity threshold value and $\Delta$ is a margin by which it is desired that the In exceeds Is.

In general, it is desirable to use largest signal diameter of the Gaussian signal profile (or radially symmetric signal profile or the like) to perform the Monte Carlo search, as it provides the maximum target zone relative to the search zone, thereby yielding faster results. However, it is also desirable to provide robust results in terms of correct detection. Thus, in general, the margin may facilitate a tradeoff between these two aims, namely allowing for reliable signal recognition above noise and a later gradient algorithm optimization while having possibly large target zone. Moreover, provision of an

adjustable margin (∆) provide some room to restrict the threshold more in case the system experiences a change in noise characteristics or the like.

Among parameters that affect the performance of the Monte Carlo simulation-based photonics alignment are a relative size of the target zone (the light cross-section, that may be defined in terms of its diameter, or mode field diameter or the like) and the bounding area search zone. (search range)

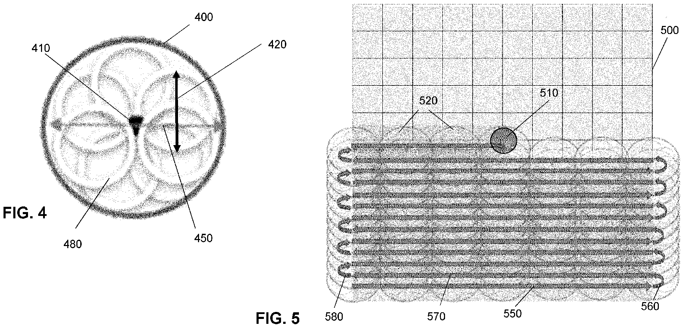

Fig. 4 illustrates that each sampled (measured in step 230) point 410 in the search space has an impacted search zone 400 with a diameter 450, for which it can effectively identify a signal. That zone 400 can be described generally as a radially symmetric distribution with a diameter equal to two times the Mode Field Diameter (MFD) 420 of the target, centered about that measurement point 410. This is assumed as true for a Gaussian target or for any other radially symmetric geometries, such as flat top targets with elliptical target zones or the like, for which the method is applied.

Thus, the diameter $P^i_{esz}$ (450) of an effective search zone 400 of a point 410 (also denoted by point index i) is correlated to the Mode Field Diameter $T^i_{MFD}$ (420) of the target (light beam to be detected) or target diameter (at a selected intensity level of the signal):

$$P^i_{esz} = 2 * T^i_{MFD}.$$

In particular, in this example, the effective search zone 400 of a point 410 is equal to twice the MFD 420. Index i specifies a particular point 410 among the points in the search field (search range 300). It is noted that the search zone 400 should encapsulate the target 410 for the alignment to be successful. Partial overlap may not be able to provide sufficient robustness of detection.

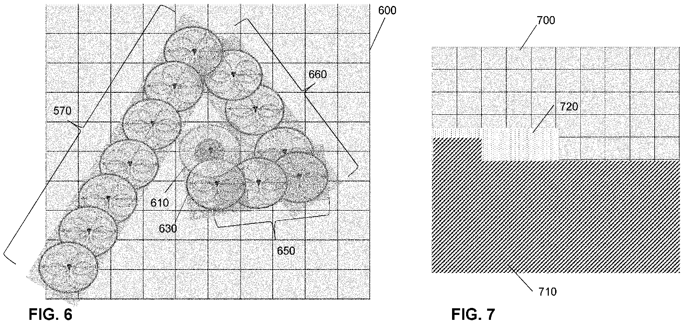

Figs. 5 and 6 illustrate an example in which a 10 μm target 510 is located in a center of a search field 500 of the size 100 μm x100 μm. Fig. 5 illustrates a raster scan method as known in the art and Fig. 6 illustrates a random (Monte Carlo) method of the present disclosure.

In the raster scan method of Fig. 5 operated at 10 Hz (10 scans per second), the alignment would be completed in this scenario in about 12.5 scans (or about 1.250 seconds) which corresponds to approximately 25 segmented moves. A scan here is defined as a basic move pattern that is repeated. In Fig. 5, the scan includes a linear forward move 550 and a left turn 560, or a linear back move 570 and (if necessary) a right turn 580. As all movements are segmented into these four (or three at the beginning and end of scanning) parts, the 12.5 scans correspond to approximately 25 segmented moves. In this example, a scan pitch is about at about 0.5 of the target zone 510 diameter (i.e. 5 μm) to facilitate a successful outcome (positive detection of the light). A high sampling frequency (e.g. 5 kHz in this example) would make the effective search zones 520 appear approximately rectangular as shown in Fig. 5. This is caused by the close scanning (measurement) points i and the corresponding overlapping effective search zones 520.

In the Monte Carlo based method of Fig. 6, each measurement point has an effective search zone 630, which is based on the relation above, and has a value of 20 μm in this example. The density of sample (measurement) points along a vector (linear path such as paths 650, 660, and 670) looks approximately also like a rectangular zone due to high frequency sampling of e.g. 5 kHz. In the example of Fig. 6, only four moves are necessary until the target 610 (similar to target 510 of Fig. 5) is acquired within the search space 600, which has the same size as 500 in Fig. 5. This would be a typical result in such a search per simulation and test. With 100 Hz moves, the total search time is 40 ms (and with 10 Hz moves equivalent to Fig. 5, approximately 400 ms).

In a system 100 using Monte Carlo search, points can be sampled at about 5 kHz and coordinated move sequences can be performed near the practical top end at 10 Hz (depending on loading and move conditions) and isolated vector (linear) moves can run at approximately 100 Hz (under similar conditions), using scaled motions with micron scale dimensions. Herein, isolated vector moves are moves that are not a part of a larger systematic pattern (like raster scan) that is intended to be followed with fidelity. In such isolated vector moves accuracy or repeatability of the moves in sequence (or whether they ever settle to target positions) is not a concern. On the other hand, in raster moves ideally, the motion is settled and repeatable on fixed pitch. Also, a curvilinear movement at the turns is more complicated and may thus be slower.

Fig. 7 illustrates a comparison of the respective areas searched per unit/time with raster scan and Monte Carlo search. In particular, a first portion 710 has been searched by the Monte Carlo Method in 40 milliseconds, achieving about 44% coverage of the search range 500, which corresponds to about 1.1% per millisecond. Comparatively, the raster scan searched area 720 (also comprising area 710) is approximately, 52% coverage in 1.25 seconds, corresponding to about 0.04% per millisecond.

*Double-Sided First Light Search*

There has been no standard well-known photonics double-sided first light finding technique to align a sender 120 (or 130) with a receiver 170 through an intermediate waveguide efficiently. Current approaches rely on some type of an iteration that has not been applied broadly and efficiently so far.

The difficulty becomes apparent when raster scans of an area (search range) with a sender 130 are to be made relative to the waveguide location simultaneously with a receiver 170 spatially located coincident to the waveguide as shown, for instance in Fig. 1B. Considering conventional scans run on rails (without any adaptation or path alteration during the process) to completion, this event (both sender 130 and receiver 170 being aligned through intermediate waveguide 140 simultaneously -- at their correct respective positions at identical times) is highly unlikely to occur spatially and temporally, especially with target sizes at the micron scale.

The lighting alignment method performs these moves simultaneously until an optimized automated threshold condition is found resulting in a non-iterative process with relative efficiency limited primarily by relative size of search and target zones. In particular, the Monte Carlo search includes two independent searches (corresponding to the first search described above) running in respective local search ranges but using the same signal measurement (230) and evaluation (240) to terminate the simultaneous search. Fig. 1C illustrates a system 100c including the signal receiver 170 as in Fig. 1B that is coupled 182 to a measurement device 150c. Fig. 1C shows an example of light coupling from the (external) emitter 130 (e.g. transmitted through fiber) to the receiver 170 over a waveguide 145. The coupling is provided in that the emitter 130 is aligned to a waveguide input (illustrated in Fig. 1C by black dot at a position within the waveguide 145 the light 147 is entering) on one side of the waveguide and the receiver 170 is aligned to a waveguide output (illustrated in Fig. 1C by black dot at a position within the waveguide 145 the light 148 is outgoing). The path within the waveguide 145 is denoted as a connection 144 between the waveguide input and the waveguide output.

Search zones 141 and 142 are search zones coupled with respective light emitter 130 and light receiver 170. It is noted that search zones 142 may be also coupled to search zone 141, i.e. correspond to the zone obtained by all light outputs 148 resulting from lights inputs anywhere in search zone 141 and the connection 144 (how the light input into the waveguide 145 translates to light output form the waveguide 145). However, if the search is performed independently for the emitter 130 and the receiver 170, the search zoned may be decoupled.

Both independent searches are using the same signal 182 for evaluation in the alignment module 150c. The signal 182 is going from a correctly positioned transmitter 130 carried by motion device 165 into waveguide input 147 through conducting path (with output in 148) to correctly positioned receiver 170 (carried by the motion device 165) coupled to detector/power meter and controller 150c where it is evaluated by Monte Carlo search described above to terminate search when the threshold condition is met. As described above, the threshold condition may be set in a controller 190c. It is noted that unlike in Figs. 1A and 1B, in Fig. 1C the motion device 165 is configured to independently control (schematically indicated in the figure by independent signal paths 181 and 182 leading from the controller 150c to the motion device portions corresponding to the transmitter 130 and receiver170 respectively) motion of the transmitter 130 and receiver 170. Although Fig. 1C illustrates coupling via a waveguide as in Fig. 1B, the double-sided search is applicable in a similar manner to direct coupling as shown in Fig. 1A - Fig. 1A could be modified by enabling independent motion control of the transmitter 120 and receiver 170. It is noted that the "motion device" may comprise two positioning systems controlled by one control module.

*Automated threshold determination*

According to an embodiment, which may be applied independently from or in combination with the above described random search, automated threshold setting approach for successful light detection is provided.

Currently known threshold condition determination is made typically prior to the scan using values that have been acquired empirically over a range of conditions suitable to reliably find a signal above noise in the current use case (using various standard methods). However, such an approach may not work well for various different scenarios. For example, an appropriate setting may differ with temperature, electromagnetic interference, ambient light condition of the surroundings, signal transmission characteristics of the sender and receiver, or the like. In order to improve the success detection, an automated technique is provided which may be implemented in the control module 190 that performs a signal evaluation and threshold setting criteria automatically. Such setting is possible during the scanning / sampling.

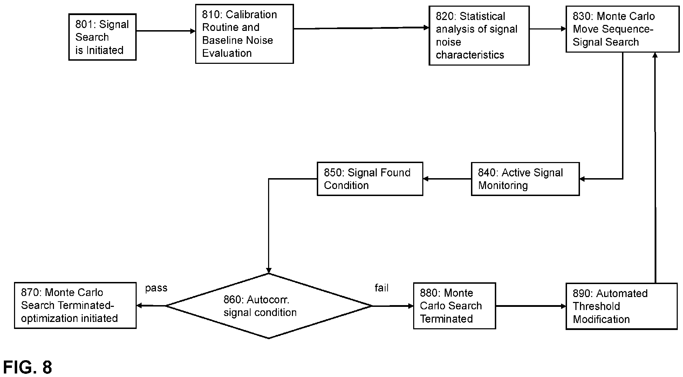

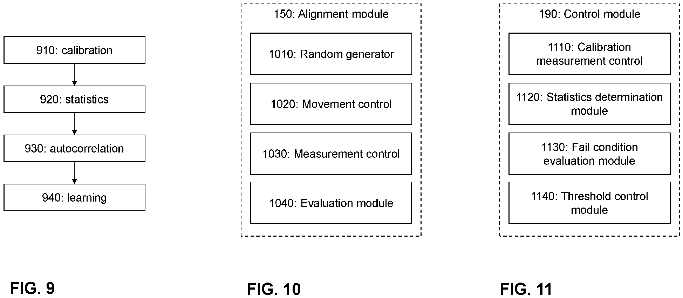

A method for automated threshold determination illustrated in Figs. 8 and Fig. 9. Fig. 9 summarizes possible stages of the automated threshold determination, namely calibration 910, statistics determination 920, autocorrelation 930, and learning 940. Fig. 8 provides an exemplary and more detailed flow diagram embedding the threshold determination into the search and monitoring functionality described above. In particular, as can be seen in Fig. 8, signal monitoring may be performed in parallel to the first signal search and it may be a part of a sequence of: search initialization, calibration routine, threshold condition setting, and active monitoring of signal to terminate search. All processes may be performed in the alignment module 150/150c and control module 190/190c as described above.

In step 801, the first signal search is initiated. This may be performed, e.g. by an operator such as a human operator or an automation in order to align a specific input and output of the signal. Step 810 represents a calibration routine (at no signal condition) and the baseline noise evaluation. In the calibration routine, noise signal is sampled, for example at a fixed frequency. This corresponds to measuring noise signal (in absence of light signal) a plurality of times. The measurements can be performed at one and the same location within the search area or out of the search area. However, the present disclosure is not limited thereto and the measurements can be taken at more than one locations and/or repeatedly. In a specific exemplary implementation, measurements may be indexed and stored in a one-dimensional (1D) array at each sampling cycle (e.g. at the 5 kHz sampling frequency mentioned above or the like). The duration of the calibration may be pre-set. For example, the measurements may be collected for 6 milliseconds (resulting in 30 measurement points collected in the 1D array). As is clear to those skilled in the art, the 5 kHz and 6ms are only examples and these values may be set differently. Output of step 810 is thus an array of measured noise signal values.

In step 820, statistical analysis of signal noise characteristics is performed. Based thereon, and effective bit-resolution evaluation of the signal may be performed. The statistical analysis is performed on the 1D array obtained in step 810 and includes e.g. a calculation of average signal strength, standard deviation and/or variance. This calculation may be executed in one controller cycle (for example 200 $\mu$s) and is further used to determine a threshold condition baseline at e.g. six-sigma level. For example, The alignment control module 150 synchronously collects variables and updates them each control cycle. In the control cycle, synchronous update of control module variables such as positions, feedback, signal level, etc. is performed. Control Modules may have different cycle rates generally: it may be SkHZ as mentioned above or any other value depending on the design of the system (e.g. 20 kHz rate or another rate).

Step 830 refers to Monte Carlo move sequence for the first signal search. Step 840 refers to active signal monitoring in which each controller cycle the signal is sampled synchronously with position change and referenced against the threshold criteria. In step 850, signal found condition is tested. It is noted that steps 830 to 850 are schematic. They may correspond to steps 210-240 of the first search in Fig. 2. However, various implementations are conceivable. The condition testing may be performed at each sample point as in Fig. 2, but this is not to limit the present disclosure. It is conceivable to first perform the entire linear movement between two nodes and collect signal points and then testing the collected signal points for the condition (e.g. the threshold on signal strength). The testing may thus be synchronous with sampling, with linear movement, or even performed after a multiple linear movements.

If the signal found condition is observed above the six-sigma threshold condition, the autocorrelation check is performed in step 860. Here signal condition autocorrelation is checked around the pre-aligned/aligned change point (below the autocorrelation condition at the change point is explained in greater detail). If the autocorrelation condition is satisfied ("pass"), in step 870, Monte Carlo search is terminated and the second search (optimization) is initiated. If, on the other hand, the autocorrelation condition is not satisfied ("fail"), in step 880 Monte Carlo Search is terminated and step 890 of automated threshold modification is performed. In this step, adjustment of the threshold condition is performed based on the autocorrelation check. In particular, effective bit-resolution calculation with a modification of six-sigma threshold condition may be performed.

For example, a method is provided for setting a threshold condition. The threshold serves for determining whether or not an aligning an optical input with an optical output was successful. In other words, the threshold may be used to terminate a search for the aligning of the optical input 170 with the optical output 120. The search includes obtaining one or more measurement values of the signal strength at the optical input on the trajectory along which a signal is sampled (scanned). The method includes the statistics determination 920 and learning 940.

In particular, the method includes a step of determining a statistical characteristics of said one or more measurement values of the signal strength. This step corresponds to step 920 of Fig. 9. The method further comprises determining or updating the threshold condition based on the statistical characteristics. This corresponds to the learning step 940 of Fig. 9.

For example, the determining a statistical characteristics includes determining a variance indication (e.g. a standard deviation or variance) and the threshold condition is based on a function of the variance indication.

Such function of the variance may include a product of the standard deviation (referred to as $\sigma$) and an accuracy factor such as 5 or 6 or the like. For example, the threshold Thr of the threshold condition may be determined as Thr = average + 6*$\sigma$ + $\Delta$learned. Here, "average" is average (in general mean) of the signal without light (baseline noise) and $\Delta$learned is a value determined based on a history of measurements as will be described below in more detail. In other words, $\Delta$learned is a term for adapting the threshold.

It is noted that the baseline noise evaluation may be performed at a no signal condition in the step 910 of calibration. An initial calibration may be performed at the beginning of the search with light from the optical output 120 switched off. In particular, the calibration step 910 may comprise: measuring noise strength values in absence of the light beam; determining a statistics of the noise strength; and based on the statistics of the noise strength, determining resolution of the measurement values. This will be described in the following in more detail.

The calibration is generally performed for a given search range by moving optical input 170 and/or optical output 120 to a region without signal and collect data for a predefined short time period. By way of example, the predefined short period may be in some implementations 4-10ms, e.g. 6 ms. However, this is only an exemplary value and does not limit the present disclosure. Given a high synchronous sampling rate (e.g. the same rate as applied for measurements during a linear move) of the control module 190, this may take mere milliseconds (e.g. 30ms for the scenario described herein, but may be different for other scenarios) to obtain suitable statistics. Signal data (voltage) are collected e.g. in a 1D array of points to perform analysis on.

A calibration may be performed (repeated) during the light search in a spatial location without coupled light signal between sender(s) and receiver(s) even if light is on. For example, the determining or updating the threshold is performed during performing the first search 280.

The baseline noise samples may be collected (stored) for instance in an array of values sampled (measured) at a fixed frequency (e.g. 5kHz which may be the same or different as during the scanning). The baseline noise samples may be collected on the same location with no signal a plurality of times. However, the present disclosure is not limited thereto and a plurality of locations at one time instance or at a plurality of time instances may be measured.

The signal measurement is performed with an optical detector and power meter combination that evaluates signal strength as understood by a control module (e.g. 190 in Fig. 1) as a scaled analog voltage. When sender (e.g. output 120) is misaligned with receiver (e.g. input 170) so that there is no signal coupling, and only baseline systemic electrical noise interpreted by an analog voltage (e.g. with power meter wired to the control module 190) is present. The signal is then a voltage based measurement value (or values) in the calibration array. Whether or not the signal is misaligned may be determined by a pre-set threshold or pre-calibrated based on ration between noise and light signal in previous passes.

The values of the 1D (voltage) array are used to determine bit resolution and statistics. For example, an average signal $\bar{x}$ is calculated from n observations $x_i$ (e.g. sampled at a fixed frequency) as follows:

$$\bar{x} = \frac{\sum_{i=1}^{n} x_i}{n}$$

Then, a standard deviation S (may be also denoted $\sigma$) of the measurement population may be evaluated as follows:

$$S = \sqrt{\frac{\sum(x_i - \bar{x})^2}{n - 1}}$$

It is noted that in this example, the observations are voltages. However, the present disclosure is not limited to such calculations and in general, observations may be processed in any units, they may be light intensities (e.g. derived from voltages or otherwise) or any other units correlated with light intensity.

To determine bit resolution, the elements of the 1D calibration array (storing measurement values) are searched to find a minimum difference value. The 1D calibration array contains a number of elements (e.g. 30 or more or less). Each of those elements is paired with other individual elements of the array and a difference is formed for each pair. A minimum difference value is found of all stored noise measurements and gives us a baseline quantized bit (i.e. the effective resolution of the setup per noise measurement). That bit resolution provides a baseline and thus the base unit to move the threshold up or down. By this check, A/B testing as well testing for shielding (EMI) light box enclosures, different light power sources etc. may also be facilitated.

In other words, the minimum value represents the minimum in the binary measurement representation corresponding to the Least Significant Bit (LSB). This might be understood as effective least significant bit of the setup as a whole under a baseline "no signal present" noise condition. It is noted that this LSB determination is only exemplary and in practice, the LSB may be determined in a different manner, considering the entire range of signal values and/or performing only calibration in a different manner or some specific conditions.

The combination involves calculating differences between the measured points. In particular, the total number of combinations $nC_r$ for calculating the differences can be calculated as follows:

$$_nC_r = \frac{n!}{(n-r)!r!}.$$

With r representing the count for the groupings of elements (in this case r=2 for the pairs of measurement values from the list (1D array mentioned above)), and "!" representing operation of factorial. It is noted that the differences may be stored in a separate array for evaluation (e.g. minimum finding). The array of noise differentials is searched programmatically by the algorithm to determine a quantized effective least significant bit for measurement (and automated threshold adjustment).

In summary, in step 920, an average value in the array (after or during calibration move) (effectively optical/electrical noise in the environment without signal present) is determined to obtain a baseline noise in the system. Then a standard deviation of the noise distribution is calculated. The threshold of, for example, a six times sigma above average noise may be then set to determine a measured signal as belonging to the light source (search target zone). The threshold may be then used during the search (e.g. step 240) if a measured signal is higher than six times sigma, the measured signal is considered as belonging to the search target (light signal). As mentioned above, the six times sigma may be only a term in the threshold, and an additional offset may be applied to six times sigma to obtain the threshold. Moreover, the factor with which sigma is multiply does not need to be six, it can be five or seven, depending on the desired accuracy / speed of the first search 280.

Step 930 in Fig. 9 shows determination of an offset for obtaining a threshold update. If a currently set threshold condition is met as a part of the Monte Carlo search, the search can be immediately terminated (cf. step 240, "yes") at the signal found location. Then, an autocorrelation approach 930 may be applied. In particular, step 930 includes, when the threshold condition is satisfied, determining whether the measured values satisfy an auto-correlation condition and resuming the first search 280 if the autocorrelation condition is not satisfied. Moreover, if the autocorrelation condition is not satisfied, the threshold condition may be adapted.

In a situation in which the threshold corresponds to a signal of six sigma above noise, it should only rarely happen that the threshold is exceeded due to noise. A fail(auto-correlation) condition causes the machine to adjust from the baseline 6 sigma criteria upwards (if that conditional is set too low to yield a signal above the calibrated noise measurement and statistics). It is noted that the threshold can also be modified downwards without a fail case after learning the optimal band for fast and reliable signal finding. Some optimization techniques may rely on signal values in preceding signal found conditions. In general, patterns of signal and noise characteristics that may be collected (e.g. in arrays) along with optimization success/failures may be used to move delta up or down based on such learned combinations over iterated runs. It is noted that artificial intelligence and machine learning models such as neural networks or the like may be trained for threshold determination and used for it. For example, past thresholds and information on whether or not they led to a failure or success may be used for training, possibly together with signal and/or noise or their statistics.

In an exemplary implementation as shown in Fig. 8, signal strength Vi is collected synchronously with position information (Xi, Yi) within the search range and stored in arrays of triplets (Xi,Yi,Vi) during the Monte Carlo Signal search. When a signal is observed above the six-sigma plus delta level, the search is terminated and the signal is briefly evaluated 860 in the aligned position over a few milliseconds (obtaining post-aligned signal). This evaluation is performed to confirm that the signal condition at the aligned position (position at which the threshold condition was fulfilled in step 850) was not a false positive confirmation related to transient or other environmental noise influences or too low to reliably apply optimization. Here there would be an expectation of system change point from no signal condition to signal present in case of a false positive.

Thus, a change point detection based on autocorrelation may be performed to compare the pre-aligned noise with the post-aligned signal strength. The pre-aligned signal characteristics should be consistent with noise observed during calibration while the post alignment signal should include noise and at least some discernable transmitted signal in addition.

Comparatively, pre-aligned maximum measured signal should only carry noise information (at maximum): Signal(pre-alignment)=Noise(maximum). Whereas the post-aligned signal should carry some signal transmission in addition to the noise: Signal(post-alignment) = Transmitted Signal + Noise(maximum).

Thus, in step 860, pre-aligned signal data is compared to post-aligned signal data (phase lagged in time) symmetric around the change point (misaligned to aligned) to determine if the following condition is fulfilled: Signal(post-alignment) > Signal(pre-alignment) for all signal measurements made that are symmetric about the change point (e.g. stored in a signal array).

If there is an observation in which this conditional is violated, the Monte Carlo search is resumed (step 830). The search is not resumed however with the same search criteria as the transient noise that provided a false positive confirmation should be calibrated back out of the threshold criteria. This is where the machine learning (threshold adaption) uses three nodes of information to shift the threshold criteria automatically (steps 880, 890).

The maximum differential between pre-aligned and post-aligned (autocorrelated) signal data is used to determine an addition to the delta, representing the threshold change (update). The bit resolution determination is performed with the autocorrelation differential to determine how many Effective Least Significant Bits of Noise are exceeding current threshold condition. This is performed in the same way as described above, by analyzing the combined array.

In an exemplary implementation, the machine learning (threshold adaption) then applies a 2-times increase in the threshold delta (quantized to Effective Least Significant Bit) based on the maximum differential. However, this increase is only exemplary. It is noted that a different step (or different multiplier of delta) or strategy may be used. The twice delta is a conservative condition on signal threshold adder from the autocorrelation test (with consideration to effective bit resolution for the measurement). However, this delta can be adjusted or integrated, or instance, in the machine learning process for optimization. This may be performed by learning the setting from observing history and adapting the step, or even by applying artificial intelligence.

Once the delta in the threshold of the threshold condition is raised automatically, according to the above conditional (step 890) the Monte Carlo search resumes with restricted target zone at higher intensity threshold, given the present state of noise. The threshold adaption (machine learning) is an iterative process, until the threshold condition and autocorrelation are both satisfied to provide sufficient signal for optimization.

Step 940 represents learning (which may be referred to as machine learning). As described above, the calibrated noise array is collected and an evaluation of the effective bit resolution of the input signal is performed. This works by evaluating all differential combinations of the calibration array to determine a minimum differential value of collected signal observations to determine the lowest discretized increment of the signals, which corresponds effectively to the least significant bit. This quantized least significant bit is then used as a base unit for threshold adjustment above the six-sigma (or another) value, in the event of a "signal finding" autocorrelation failure. After that, in step 940, the threshold is adjusted to above the maximum autocorrelation value discretized to quantized least significant bit. On iterated runs, monitoring continues followed possibly by further adjustments to guarantee a robust value that reliably sets threshold automatically.

In summary, a noise calibration routine is performed with a parallel execution of a signal monitor to establish an automated coupling signal condition that facilitates reliable finding a signal in the search field without requiring a user defined threshold condition.

*Some exemplary experimental results*

For a single-sided first light finding, 25000 simulations of alignment of sender to receiver were run with incrementally reduced target sizes using a fixed search zone. The observations are sorted into columns 1-10 of the following table.

| Ratio | | 1 | 2 | 3 | 4 | 5 | 6 | 7 | 8 | 9 | 10 |
|---|---|---|---|---|---|---|---|---|---|---|---|
| W@HM [um] | | 30.25 | 15.125 | 10.0833 | 7.5625 | 6.05 | 5.0417 | 4.3214 | 3.7812 | 3.3611 | 3.025 |
| MOV | 99.00% | 9 | 19 | 33 | 63 | 67 | 88 | 80 | 106 | 119 | 103 |
| | All | 25 | 40 | 93 | 167 | 171 | 185 | 221 | 254 | 335 | 261 |
| Time [s] | 99.00% | 0.03 | 0.07 | 0.12 | 0.225 | 0.24 | 0.315 | 0.285 | 0.385 | 0.43 | 0.37 |
| | All | 0.075 | 0.14 | 0.335 | 0.61 | 0.62 | 0.64 | 0.77 | 0.880 | 1.175 | 1.005 |
| Fails | | 0 | 0 | 0 | 0 | 0 | 0 | 0 | 0 | 0 | 0 |

"W@HM" denotes FWHM (Full Width at Half Maximum) dimension of the Gaussian profile (target diameter). As can be seen, the smallest observed simulated zone in this test was 3 $\mu$m (at which point the test alignment requires 1 second for all observations; $\mu$ is shown in the table as "u"). "MOV" denotes the number of moves (99% of observations and all observations, not the average as discussed above for Fig. 6). "Time [s]" denotes the time for first light finding (99% of observations and all observations) in units of seconds, and "Fails" denotes the number of failures of the 25,000 samples (where first light was not found). The 25,000 samples were obtained for the same light beam profile.

The following table illustrates results for 10,000 samples (simulations) for parallel first light finding, i.e. for the two independent searches.

| Simulations | | 10,000 |
|---|---|---|
| W@HM [um] | | 30.250 |
| MOV | 99% | 35 |
| | All | 103 |
| Time [s] | 99% | 0.130 |
| | All | 0.360 |
| Fails | Total | 5 |
| | Percent | 0.050% |
| Samples | 99% | 650 |
| | All | 1800 |

(continued)

| Process Time [s] | Total | 374.083 |
| | Average | 0.037 |

In general, the search of the present disclosure may be substantially faster than the usual raster scan. In particular, the conventional scan methodology requires a controlled, coordinated turnaround to complete and continue a well-behaved sinusoidal type raster with sufficient error characteristics at precision requirements to achieve repeatable motion (at very fine pitch) at precision level within target zone dimensions along these paths. In particular, Fig. 5 line scans 550, 570 having intermediate curling paths (580, 580) that connect them and for which they must behave on tight radii of curvature. They are not simple A to B motions, but rather line scans with curled connections in the sinusoidal path (curvilinear trajectories) The scanning may be performed only in linear portions, but still, the curved movement may be more time consuming.

Moreover, in microns level, errors and instabilities may occur in following such complicated motions. In the present disclosure, this is improved by providing a vectorized (linear) motion from A to B. Here there is no pathing following or deleterious effects of straying from the path (since no consistent pitched scans for achieving the desired resolution are necessary) or trying to round very tight corners with very small radii of curvature, repetitively. The achievable scan frequencies are a function of the system characteristics and moving mass. However, especially in the domain of photonics applications with light loads, movements may be performed more quickly.

*Implementations in software and hardware*

The present disclosure provides an approach for searching alignment and an approach for setting a threshold for a search alignment. It is noted that the approach for searching alignment still achieves improvement even if a fixed or user-set threshold is applied. However, it may be also combined with the approach for setting a threshold described herein. Moreover, the approach for setting a threshold may also work for searched different from the approach for searching alignment described herein.

In other words, the pseudo random search using vectorized linear moves across the search zone with high internodal sampling may be used independently of the threshold setting, although efficacy may be further improved by combining these approaches.

In Fig. 1, an exemplary system has been shown. The system that performs stochastic motion sequences through interpolated paths across a signal finding search zone involving two or more axes of motion with signal monitoring until a signal threshold condition is met. In the system, the motion may be at least in part based on a Monte Carlo technique with Random Number Generator (RNG) providing input to an interpolated pathing algorithm commanding the motion. The value generation is performed either a priori in a preloaded array or actively during the Monte Carlo Signal search. The threshold condition may be determined automatically from a noise evaluation algorithm that runs prior to or in parallel with the Monte Carlo signal search. A signal evaluation algorithm may run in parallel at sampling frequency equal to or higher than the internodal pathing frequency generated from the Monte Carlo method until threshold condition is met and the Monte Carlo search is terminated.

These features may be implemented in various kinds of hardware. According to an example, an apparatus is provided for aligning an optical input with an optical output. Such apparatus may be similar to the system 100 shown in Fig. 1. The apparatus 100 comprises a movable equipment 160 adapted to move an optical output 120 and an optical input 170 relatively to each other.

The apparatus 100 further comprises a first processing circuitry (part of the aligning module 150) configured to perform a first search for obtaining a first alignment of the optical input 170 and the optical output 120 for which a light beam emitted from the optical output is detected at the optical input.

In particular, functional modules of the first processing circuitry (included in the aligning module 150) are illustrated in Fig. 10.

A random generator 1010 is configured to determine an alignment of the optical input and the optical output as a random value, from a predetermined search range. A movement control 1020 is configured to control the movable equipment 160 to move the optical input 170 and/or the optical output 120 such that the optical input and the optical output are in the determined alignment. A measurement control 1030 is configured to obtain one or more measurement values of the signal strength at the optical input on the trajectory to the alignment. An evaluation module 1040 is configured to evaluate whether a predefined condition is satisfied, the condition including a measurement value of a signal strength at the optical input satisfying a threshold condition. These modules are called repeatedly until the evaluation results in the condition being satisfied.

The apparatus 100 may further comprise a second processing circuitry configured to perform a second search for obtaining a second alignment of the optical input and the optical output for which the signal strength is larger than the signal strength at the first alignment. The second processing circuitry may be a part of the aligning module 150 or may be a separate processing circuitry.

Moreover, an apparatus 190 is provided for setting a threshold condition. The threshold serves for determining whether or not an aligning an optical input with an optical output performed in aligning module 150 (and generally in system 100) was successful. In other words, the threshold may be used to terminate a search for the aligning of the optical input 170 with the optical output 120 (or 130). Fig. 11 shows exemplary functional modules of the control module 190. These functional modules are configured to perform the steps described above with reference to Figs. 8 and 9.

In particular, a calibration measurement control 1110 is a module that is configured for obtaining one or more measurement values of the signal strength at the optical input on the trajectory along which a signal is sampled (scanned). A statistics determination module 1120 is configured to perform the statistics determination 920, i.e. determining a statistical characteristics of said one or more measurement values of the signal strength. This corresponds to step 920 of Fig. 9.

A fail condition evaluation module 1130 may be present (but it is not necessary in general) and configured for evaluating the autocorrelation as described above (step 860).

A threshold control module 1140 is configured to determine or update the threshold condition based on the statistical characteristics. This corresponds to the learning step and learning 940 or 890.

The first and second circuitries and modules mentioned above may be implemented by any available or application specific hardware.

It is noted that although embodiments and examples of the present disclosure were provided in terms of a method above, the corresponding devices providing the functionality described by the methods are also provided. Moreover, it is noted that any of the steps described above may be included as code instructions in a program, which may be executed by one or more processors (processing circuitry).

The methodologies described herein may be implemented by various means depending upon the application. For example, these methodologies (especially the alignment controller 150 and/or the controller 190) may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The above examples are not to limit the present disclosure. There are many modifications and configurations, which may be used in addition or alternatively. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

*Selected embodiments and examples*

According to a first aspect, a method is provided for aligning an optical input with an optical output. The method comprises the step of performing a first search for obtaining a first alignment of the optical input and the optical output for which a light beam emitted from the optical output is detected at the optical input, wherein the searching of the alignment includes performing the following steps repeatedly until a predefined condition is satisfied, the condition including a measurement value of a signal strength at the optical input satisfying a threshold condition: (i) determining an alignment of the optical input and the optical output as a random value, from a predetermined search range, (ii) moving the optical input and/or the optical output such that the optical input and the optical output are in the determined alignment, and (iii) obtaining one or more measurement values of the signal strength at the optical input on the trajectory to the alignment. The method further comprises the step of performing a second search for obtaining a second alignment of the optical input and the optical output for which the signal strength is larger than the signal strength at the first alignment.

According to a second aspect, in addition to the first aspect, the first search is performed in two dimensions, and the alignment is defined by two coordinates of the respective two dimensions. It is noted that the two dimensions may be, but do not need to be perpendicular to the light beam.

According to a third aspect, in addition to the first aspect or the second aspect, the moving step is performed by moving the optical input relative to a fixed optical output.

According to a fourth aspect, in addition to the first aspect or the second aspect, the moving step is performed by moving the optical input and by moving the optical output, both movements being independent of each other.

According to a fifth aspect, in addition to any of the first aspect to fourth aspect, the step of obtaining one or more measurement values of the signal strength comprises sampling of the signal strength during said moving step with a predefined sampling frequency.

According to a sixth aspect, in addition to any of the first aspect to fifth aspect, the method includes the steps of: (a) determining a statistical characteristics of said measurement values of the signal strength; and (b) determining or updating the threshold condition based on the characteristics.

According to a seventh aspect, in addition to the sixth aspect, the determining or updating the threshold is performed during performing the first search.

According to an eighth aspect, in addition to the sixth aspect or the seventh aspect, the determining a statistical characteristics includes determining a variance indication and the threshold condition is based on a function of the variance indication.

According to a ninth aspect, in addition to any of the first aspect to the eighth aspect, when the threshold condition is satisfied, the method further comprises: (1) determining whether the measured values satisfy an auto-correlation condition; (2) resuming the first search if the auto-correlation condition is not satisfied.

According to a tenth aspect, in addition to the ninth aspect, the method includes adapting, if the autocorrelation condition is not satisfied, the threshold condition.

According to an eleventh aspect, in addition to any of the first aspect to the tenth aspect, the method further comprises a calibration step performed before the first search, the calibration step including: measuring noise strength values in absence of the light beam; determining a statistics of the noise strength; and based on the statistics of the noise strength, determining resolution of the measurement values.

According to a twelfth aspect, in addition to any of the first aspect to the eleventh aspect, the second search is based on the gradient of the signal strength.

According to a thirteenth aspect, in addition to any of the first aspect to the twelfth aspect, said moving of the optical input and/or the optical output to the determined alignment is a linear movement.

According to a fourteenth aspect, a computer program is provided, stored on a non-transitory medium and comprising code instructions, which when executed on one or more processors, cause the one or more processors to perform the method according to any of claims 1 to 13.

According to the fifteenth aspect, an apparatus is provided for aligning an optical input with an optical output, the apparatus comprising: a movable equipment adapted to move an optical output and an optical input relatively to each other; a first processing circuitry configured to perform a first search for obtaining a first alignment of the optical input and the optical output for which a light beam emitted from the optical output is detected at the optical input, wherein the searching of the alignment includes performing the following steps repeatedly until a predefined condition is satisfied, the condition including a measurement value of a signal strength at the optical input satisfying a threshold condition: (i) determining an alignment of the optical input and the optical output as a random value, from a predetermined search range, (ii) control the movable equipment to move the optical input and/or the optical output such that the optical input and the optical output are in the determined alignment, and (iii) obtaining one or more measurement values of the signal strength at the optical input on the trajectory to the alignment; and a second processing circuitry configured to perform a second search for obtaining a second alignment of the optical input and the optical output for which the signal strength is larger than the signal strength at the first alignment.

It is noted that the apparatus may be further configured to perform the steps described above with reference to methods.

**Claims**

1. A method for aligning an optical input with an optical output, the method comprising the steps of:

    performing a first search for obtaining a first alignment of the optical input and the optical output for which a light beam emitted from the optical output is detected at the optical input,
    wherein the searching of the alignment includes performing the following steps repeatedly until a predefined condition is satisfied, the condition including a measurement value of a signal strength at the optical input satisfying a threshold condition:

- determining an alignment of the optical input and the optical output as a random value, from a predetermined search range,
- moving the optical input and/or the optical output such that the optical input and the optical output are in the determined alignment, and
- obtaining one or more measurement values of the signal strength at the optical input on the trajectory to the alignment;

performing a second search for obtaining a second alignment of the optical input and the optical output for which the signal strength is larger than the signal strength at the first alignment.

2. The method according to claim 1, wherein the first search is performed in two dimensions, and the alignment is defined by two coordinates of the respective two dimensions.

3. The method according to claim 1 or claim 2, wherein the moving step is performed by moving the optical input relative to a fixed optical output.

4. The method according to claim 1 or claim 2, wherein the moving step is performed by moving the optical input and by moving the optical output, both movements being independent of each other.

5. The method according to any of claims 1 to 4, wherein the step of obtaining one or more measurement values of the signal strength comprises sampling of the signal strength during said moving step with a predefined sampling frequency.

6. The method according to any of claims 1 to 5, including the steps of:

determining a statistical characteristics of said measurement values of the signal strength; and
determining or updating the threshold condition based on the characteristics.

7. The method according to claim 6, wherein the determining or updating the threshold is performed during performing the first search.

8. The method according to claim 6 or 7, wherein the determining a statistical characteristics includes determining a variance indication and the threshold condition is based on a function of the variance indication.

9. The method according to any of claims 1 to 8, wherein, when the threshold condition is satisfied, the method further comprises:

- determining whether the measured values satisfy an auto-correlation condition;
- resuming the first search if the auto-correlation condition is not satisfied.

10. The method according to claim 9, wherein the method includes:

adapting, if the autocorrelation condition is not satisfied, the threshold condition,
wherein the autocorrelation condition is a condition based on comparison of signal strength before alignment and after alignment.

11. The method according to any of claims 1 to 10, comprising a calibration step performed before the first search, the calibration step including:

measuring noise strength values in absence of the light beam;
determining a statistics of the noise strength; and
based on the statistics of the noise strength, determining resolution of the measurement values.

12. The method according to any of claims 1 to 11, herein the second search is based on the gradient of the signal strength.

13. The method according to any of claims 1 to 12, wherein said moving of the optical input and/or the optical output to the determined alignment is a linear movement.

14. A computer program stored on a non-transitory medium and comprising code instructions, which when executed on one or more processors, cause the one or more processors to perform the method according to any of claims 1 to 13.

15. An apparatus for aligning an optical input with an optical output, the apparatus comprising:
A movable equipment adapted to move an optical output and an optical input relatively to each other;

a first processing circuitry configured to perform a first search for obtaining a first alignment of the optical input and the optical output for which a light beam emitted from the optical output is detected at the optical input, wherein the searching of the alignment includes performing the following steps repeatedly until a predefined condition is satisfied, the condition including a measurement value of a signal strength at the optical input satisfying a threshold condition:

- determining an alignment of the optical input and the optical output as a random value, from a predetermined search range,
- control the movable equipment to move the optical input and/or the optical output such that the optical input and the optical output are in the determined alignment, and
- obtaining one or more measurement values of the signal strength at the optical input on the trajectory to the alignment; and

a second processing circuitry configured to perform a second search for obtaining a second alignment of the optical input and the optical output for which the signal strength is larger than the signal strength at the first alignment.

FIG. 1A

FIG. 1B

FIG. 1C

FIG. 2

FIG. 3

FIG. 4

FIG. 5

FIG. 6

FIG. 7

| 801: Signal Search is Initiated | → | 810: Calibration Routine and Baseline Noise Evaluation | → | 820: Statistical analysis of signal noise characteristics | → | 830: Monte Carlo Move Sequence-Signal Search |

850: Signal Found Condition ← 840: Active Signal Monitoring ← 830

860: Autocorr. signal condition

pass → 870: Monte Carlo Search Terminated-optimization initiated

fail → 880: Monte Carlo Search Terminated → 890: Automated Threshold Modification

**FIG. 8**

| 910: calibration |
| 920: statistics |
| 930: autocorrelation |
| 940: learning |

**FIG. 9**

**150: Alignment module**

| 1010: Random generator |
| 1020: Movement control |
| 1030: Measurement control |
| 1040: Evaluation module |

**FIG. 10**

**190: Control module**

| 1110: Calibration measurement control |
| 1120: Statistics determination module |
| 1130: Fail condition evaluation module |
| 1140: Threshold control module |

**FIG. 11**

FIG. 12

## EUROPEAN SEARCH REPORT

**Application Number**

EP 24 15 2916

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/206686 A1 (PAU STANLEY [US] ET AL) 6 November 2003 (2003-11-06) * paragraphs [0033] - [0038] * * figures 1, 2 * | 1-15 | INV. G02B6/42 |
| A | US 2005/175296 A1 (MASSEY BRIAN [US]) 11 August 2005 (2005-08-11) * paragraph [0045] * * figure 8 * | 1-15 | |
| A | US 2002/101581 A1 (MURAKAWA MASAHIRO [JP] ET AL) 1 August 2002 (2002-08-01) * paragraphs [0045] - [0048] * * figures 5, 19, 20 * | 1-15 | |
| A | US 7 236 680 B1 (JORDAN SCOTT C [US]) 26 June 2007 (2007-06-26) * columns 12-31 * | 1-15 | |
| A | DOHOON LIM ET AL: "Highly-enhanced active beam-wander-correction for free-space quantum communications", ARXIV.ORG, CORNELL UNIVERSITY LIBRARY, 201 OLIN LIBRARY CORNELL UNIVERSITY ITHACA, NY 14853, 6 November 2023 (2023-11-06), XP091652374, * pages 4-6 * * figures 1, 2 * | 1-15 | **TECHNICAL FIELDS SEARCHED (IPC)** G02B |

The present search report has been drawn up for all claims

| Place of search | Date of completion of the search | Examiner |
|---|---|---|
| The Hague | 12 June 2024 | Hohmann, Leander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 2916

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2024

| Patent document cited in search report | | Publication date | Patent family member(s) | | Publication date |
|---|---|---|---|---|---|
| US 2003206686 | A1 | 06-11-2003 | NONE | | |
| US 2005175296 | A1 | 11-08-2005 | JP | 2005222047 A | 18-08-2005 |
| | | | US | 2005175296 A1 | 11-08-2005 |
| | | | US | 2006133735 A1 | 22-06-2006 |
| US 2002101581 | A1 | 01-08-2002 | JP | 3645168 B2 | 11-05-2005 |
| | | | JP | 2002122758 A | 26-04-2002 |
| | | | US | 2002101581 A1 | 01-08-2002 |
| US 7236680 | B1 | 26-06-2007 | NONE | | |

EPO FORM P0459

For more details about this annex : see Official Journal of the European Patent Office, No. 12/82